# EUROPEAN PATENT APPLICATION

(11) **EP 1 265 429 A2**
(43) Date of publication of application: **11.12.2002**
(21) Application number: 02009143.5
(22) Date of filing: 24.04.2002
(51) Int. Cl.: H04N 1/00

(54) **Data communication apparatus and internet facsimile apparatus**

(30) Priority: 08.06.2001 JP 2001173930
(71) Applicant: MATSUSHITA GRAPHIC COMMUNICATION SYSTEMS, INC., Meguro-ku Tokyo 153-8687 (JP)
(72) Inventor: Saito, Kyoji, Kawasaki-shi, Kanagawa 214-0003 (JP); Akimoto, Masao, Kunitachi-shi, Tokyo 186-0003 (JP); Toyoda, Kiyoshi, Kunitachi-shi, Tokyo 186-0001 (JP)
(74) Representative: Grünecker, Kinkeldey, Stockmair & Schwanhäusser Anwaltssozietät

(57) **Abstract**

An internet facsimile apparatus and data communication apparatus that can directly exchange capability information of sender and receiver sides and maximize the capability of both sides is provided, by obtaining an IP address of a destination terminal based on the input e-mail address, and by directly transmitting the e-mail to the destination terminal using the IP address of the destination terminal without using mail servers. Also, using the IP address of the destination terminal, a connection is established with the destination terminal to execute a mail protocol that can exchange capability information. After obtaining the capability information of the destination terminal, data format of the sending data is converted to match the capability information of the destination terminal, and the sending data is transmitted by e-mail.

## Description

### BACKGROUND OF THE INVENTION

### 1. Field of the Invention

This invention relates to a data communication apparatus and internet facsimile apparatus that transmit/receive e-mail using e-mail protocols.

### 2. Description of Related Art

Internet facsimile apparatuses that transmit mail converted from original image data into an e-mail format using e-mail protocols have been commercially available. Such internet facsimile apparatuses have IP addresses of specific mail servers (sender mail servers) initially configured, and, when a destination mail address is input and the transmission is requested, forward the e-mail to the sender mail server using the IP address of the sender mail server. From the destination mail address of the e-mail, the sender mail server obtains an IP address of a mail server (receiver mail server) where receiver terminal mailboxes are located, and forwards e-mail to the receiver mail server using the obtained IP address. The receiver mail server stores e-mail in the receiver terminal mailboxes based on the destination mail addresses, and delivers the receiving mail to the receiver terminals, according to a protocol such as POP3, for example. Hence, e-mail is transmitted from internet facsimile apparatuses to receiver terminals designated by destination mail addresses, via sender mail servers and receiver mail servers.

Such a mail transmission method via mail servers described above does not allow the sender internet facsimile apparatus and the receiver terminal to negotiate their capabilities. Therefore, an internet facsimile apparatus sets a minimum capability to be maintained (minimum set) (ITU recommendation T37), and conducts e-mail transmissions with data format (format type, paper size, resolution, encoding method, etc.) set by the minimum set.

However, even if a sender terminal is able to achieve image data with higher resolution than what is set by the recommendation, it is required to lower the resolution to match the recommendation. Also, even if a receiver terminal has the same capability as the sender terminal, with a higher capability than what is recommended, the receiver terminal has to receive the image data with lower resolution. Thus, capabilities of sender and receiver terminals have not been fully utilized.

This invention is provided in view of the above-described problems. The object of the present invention is to provide a data communication apparatus and internet facsimile apparatus with which sender and receiver terminals can directly exchange capability information of both sides, to utilize their maximum capabilities.

### SUMMARY OF THE INVENTION

The present invention obtains an IP address of a destination terminal based on an input e-mail address, and directly transmits e-mail to the destination terminal using the IP address of the destination terminal instead of using mail servers.

The present invention also establishes a connection with the destination terminal using the IP address of the destination terminal, executes a mail protocol that can exchange capability information, obtains the capability information of the destination terminal, and transmits the sending data as e-mail after converting the data format of the sending data to match the capability information of the destination terminal.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 shows a structure of hardware of an internet facsimile apparatus according to an embodiment of the present invention;
Fig. 2 is a functional block diagram of the internet facsimile apparatus according to the above-described embodiment;
Fig. 3 shows an inner table equipped in the internet facsimile apparatus according to the above-described embodiment;
Fig. 4 is a flowchart illustrating a first half of an operation performed by the internet facsimile apparatus according to the above-described embodiment;
Fig. 5 is a flowchart illustrating a second half of the operation performed by the internet facsimile apparatus according to the above-described embodiment;
Fig. 6 is a sequence chart of an SMTP in the internet facsimile apparatus according to the above-described embodiment; and
Fig. 7 shows a structure of a network according to the above-described embodiment.

### DETAILED DESCRIPTION OF PREFERRED EMBODIMENTS

The embodiment of the internet facsimile apparatus of present invention is explained in the following, in reference to the above-described drawings.

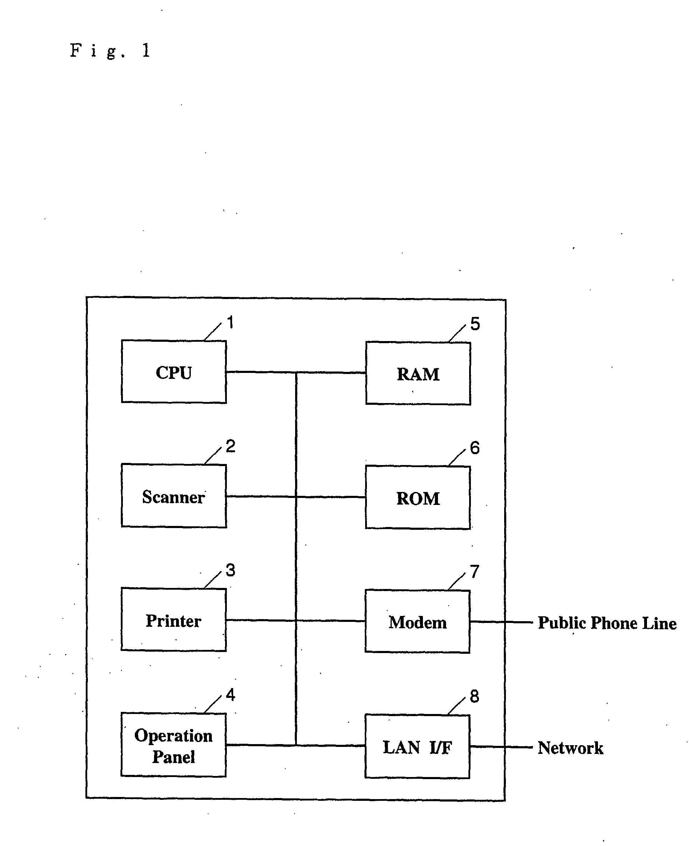

Fig. 1 shows a general structure of hardware of an internet facsimile apparatus according to an embodiment of the present invention. In the internet facsimile apparatus of this drawing, a scanner 2, a printer 3, an operation panel 4, a RAM 5, a ROM 6, a modem 7, a LAN interface 8, and other various parts that are not shown in the drawing are connected to a CPU 1 via an internal bus.

The CPU 1 is a section that controls operations of each portion of the apparatus and executes a various programs stored in the ROM 6 to provide functions to be described later. The scanner 2 is a section that scans a document and captures the image information. The image information scanned by the scanner 2 is printed out from the printer 3 or transmitted outside, according to instructions from the operation panel 4. The printer 3 is a section that prints the image scanned by the scanner 2 or received from outside. The operation panel 4 is a section that inputs destination information such as e-mail addresses of destination terminals and phone numbers, operational modes such as transmission and copying, and other various instructions. The RAM 5 is a section that is used as a work area or the like, when processing image information. The ROM 6 is a section where programs necessary for the apparatus to operate as an internet facsimile apparatus is stored. The modem 7 is a section that executes steps for connecting the apparatus and the other side for the communication and modulates data to adjust with phone lines, when conducting facsimile communication (transmitting/receiving) via a phone line or connecting to an internet service provider via dial-up. The LAN interface 8 is a section that provides interface functions to connect the internet facsimile apparatus to the LAN.

If the input destination from the operation panel 4 is a mail address, the above-described internet facsimile apparatus attaches the image information that is scanned by the scanner 2 to e-mail, and transmits the data from the LAN interface 8 according to the SMTP. Also, if the input destination from the operation panel 4 is a phone number, the apparatus operates as a G3 or G4 facsimile machine and transmits the image information as a facsimile to the destination via the modem 7.

When receiving e-mail from the LAN interface 8 addressed to the apparatus itself, on the other hand, the apparatus opens the received mail and prints the text data of the mail and the attached image information from the printer 3. Also, if the modem 7 detects a receiving call, the apparatus operates as a G3 or G4 facsimile machine, receives the image information from the sender and prints the same from the printer 3.

This internet facsimile apparatus is provided to obtain an IP address of the destination terminal, to directly exchange capability information with the destination terminal using the SMTP, and to directly transmit mail to the destination terminal. This is based on a premise that the destination terminal is capable of exchanging capability information using the SMTP.

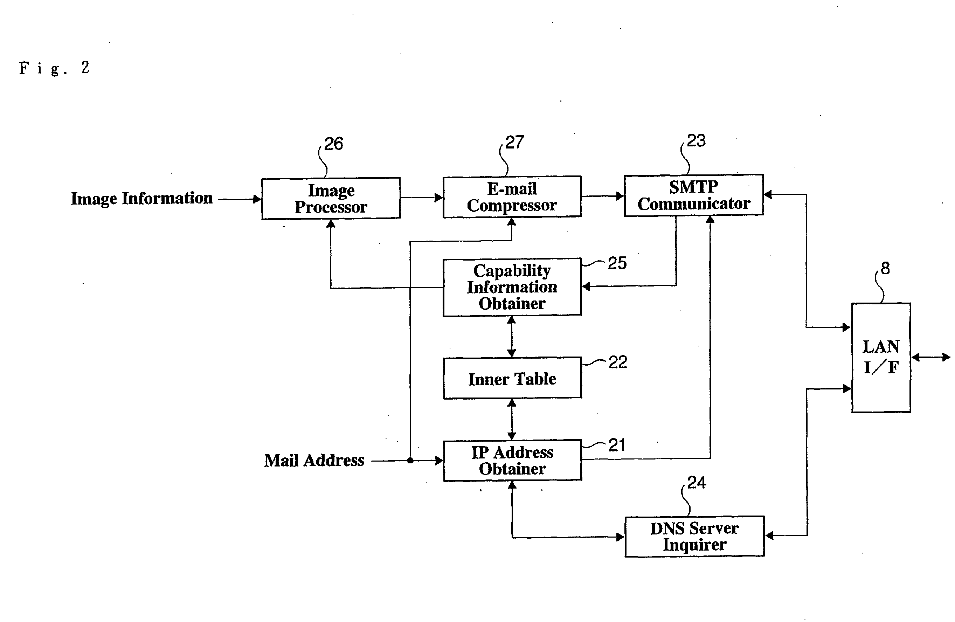

Fig. 2 is a functional block diagram of the internet facsimile apparatus to achieve the above-described functions.

An IP address obtainer 21 obtains an IP address of the destination terminal by analyzing the mail address of the destination terminal, which is input from the operation panel 4. As for methods of obtaining IP addresses, two methods are exemplified hereafter: registering IP addresses in an inner table 22 associated with mail address information; and making an inquiry to a DNS server.

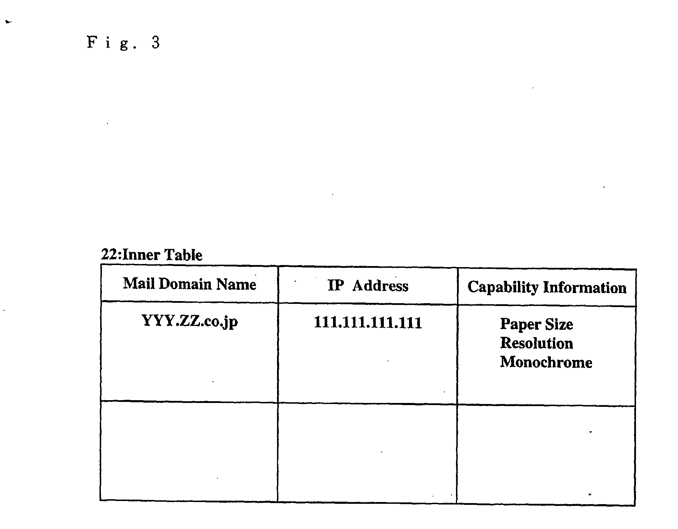

Fig. 3 shows a data structure of the inner table 22. Domain name portions of mail addresses of destination terminals are registered, and IP addresses of the destination terminals and capability information associated with each domain name are registered as well. Instead of registering domain names only, the entire addresses can be registered. Capability information includes paper size, resolution, choice of monochrome/color, existence of PDF support, supported encoding method, existence of relaying function, allowed sizes, etc., however, the content of the information is not limited to the above combinations.

A SMTP communicator 23 is a section that conducts e-mail communication in accordance with the SMTP (Simple Mail Transfer Protocol). To transmit e-mail, the SMTP communicator 23 establishes a TCP connection with the destination terminal, prior to the e-mail transmission, and obtains the capability information of the destination terminal while executing the SMTP. An IP address of the destination terminal, which is necessary for the SMTP communicator 23 to directly communicate with the destination terminal according to the SMTP, is obtained and provided by the IP address obtainer 21.

The DNS server inquirer 24 is a section that makes an inquiry to the DNS server for an IP address based on a domain name, when the desired IP address is not registered in the inner table 22 and the IP address obtainer 21 has made a request to obtain the same. The DNS server inquirer 24 has the IP address of the DNS server stored by default, and accesses the DNS server using the IP address when issuing an inquiry. In response to the inquiry, when the DNS server inquirer 24 receives the IP address that is associated with the domain name used for the inquiry, the DNS server inquirer 24 notifies the IP address obtainer 21. Accordingly, even IP addresses of destination terminals that are not registered in the inner table 22 can be obtained in real time.

A capability information obtainer 25 registers the capability information of the destination terminal in the inner table 22, which is received from the destination terminal during the SMTP execution by the SMTP communicator 23, and instructs an image processor 26 to process the image information in compliance with the capability of the destination terminal. The system can be set to constantly update the record of the inner table 22 with the newest capability information received by the SMTP communicator 23, or to update only the different parts from a comparison of capability information of both sides. Also, when the capability information is already registered in the inner table 22, the system can be set not to use the received capability information at all. In this case, it is preferable to save the time of previous communication and to update the capability information only after an expiration of a predetermined time interval since the previous communication.

The image processor 26 is provided with image processing functions such as converting resolution of image information and image size, and altering color image into monochrome image. The image information given to the image processor 26 is the image scanned by the scanner 2 and image provided by the other portions for transmission. The image processor 26 is instructed by the capability information obtainer 25 for changing resolutions, altering color/monochrome, etc.

An e-mail composer 27 positions a mail address input from the operation panel 4 in the destination field of a mail header, and positions the mail address of the internet facsimile apparatus in the sender field of the mail header. Further, the e-mail composer 27 attaches the image information provided by the image processor 26 to the text mail in accordance with the MIME format. The e-mail data of the MIME format is converted into the TIFF format to be provided to the SMTP communicator 23, and to be transmitted in accordance with the SMTP.

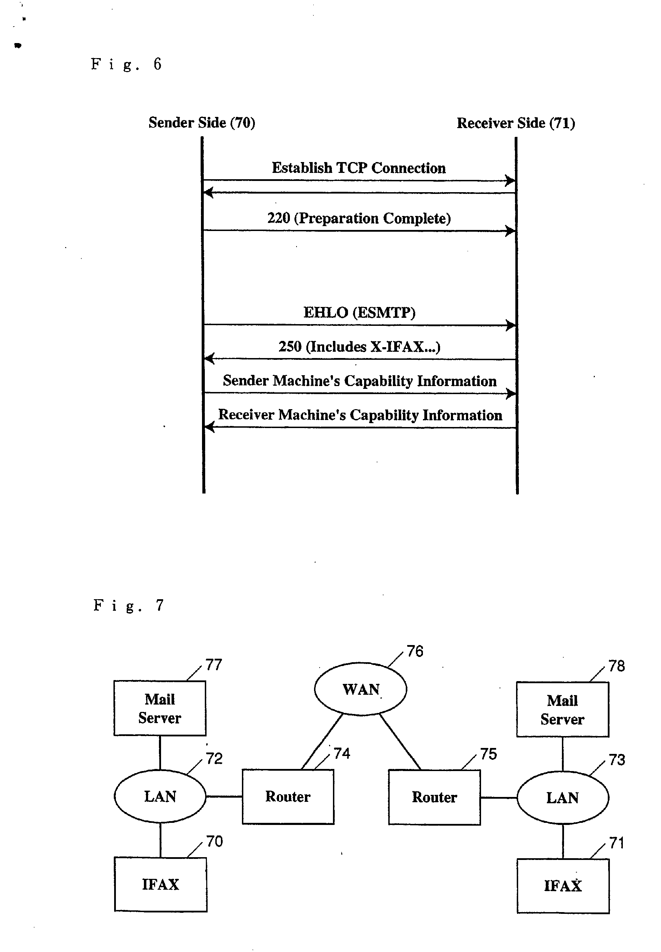

Next, the operations of the internet facsimile apparatus according to the embodiment of the present invention, which is structured as described above, is explained in reference with flowcharts. In a network structure shown in Fig. 7, mail is transmitted from a first internet facsimile apparatus 70 to a second internet facsimile apparatus 71. The first and second internet facsimile apparatuses 70 and 71 have the same functions as the internet facsimile apparatus of the present invention. The first and second internet facsimile apparatuses 70 and 71 are connected to a first and a second LAN 72 and 73 to link to a WAN 76, as the internet, from routers 74 and 75 to perform communication via the WAN.

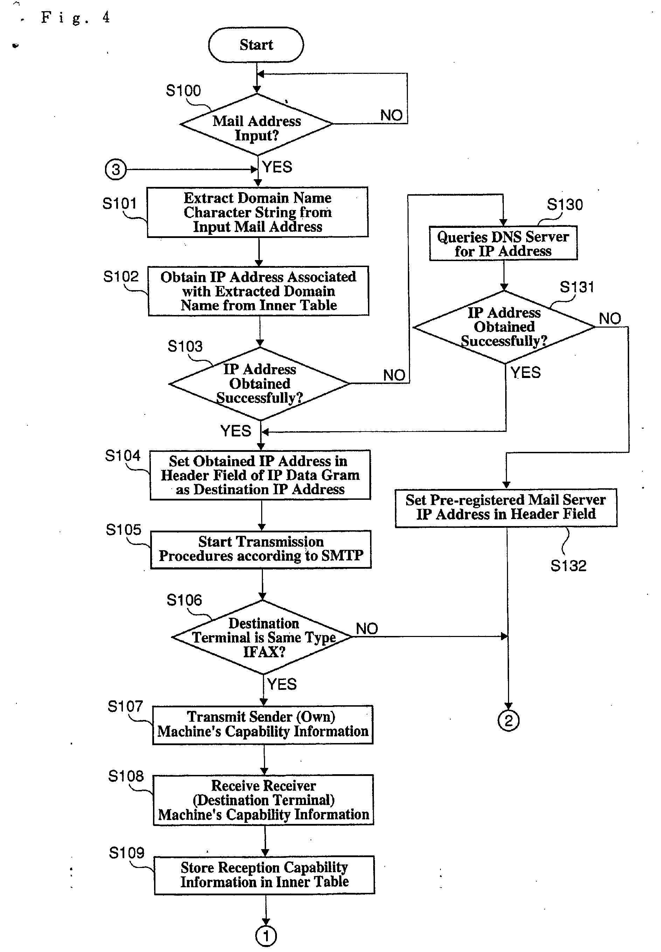

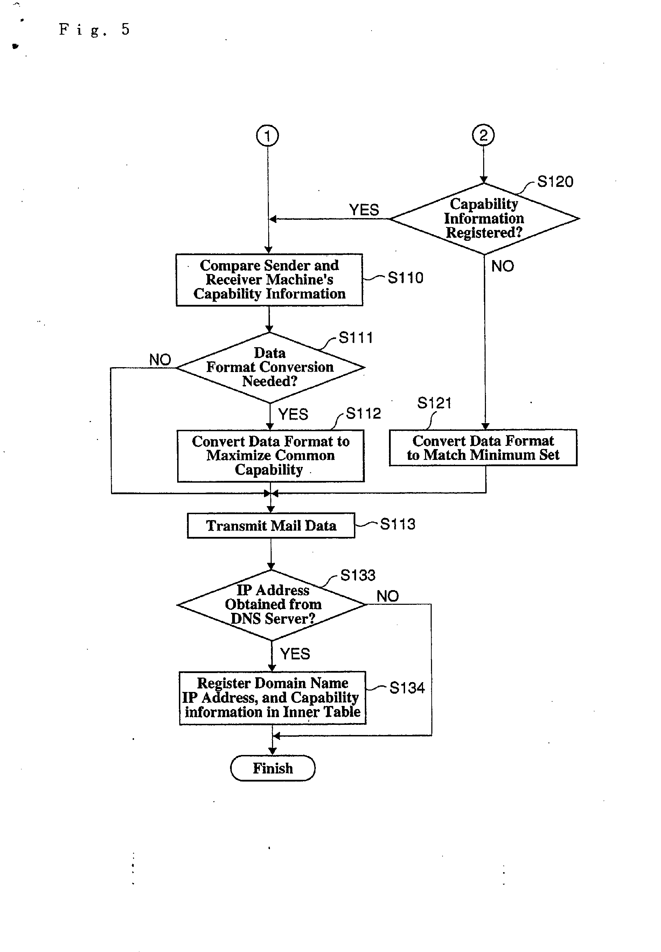

Subsequently, a series of operations from obtaining IP addresses to transmitting e-mail is explained in reference to flowcharts in Figs. 4 and 5. When a mail address of the destination terminal (71) is input from the operation panel 4 of the first internet facsimile apparatus 70 (S100), the IP address obtainer 21 cuts off a portion for the domain name from the input mail address (S101) and executes a process for retrieving the registered IP address associated with the domain name from the inner table 22 (S102). If the domain name, IP address, and capability information of the destination terminal (71) are pre-registered in the inner table 22, the IP address of the destination terminal (71) can be obtained. However, if the above items are not pre-registered, the IP address is not obtained.

If the IP address is successfully obtained from the inner table 22 (S103), the IP address is delivered to the SMTP communicator 23, and the SMTP communicator 23 is instructed to start communicating for mail transmission with the destination terminal (71) in accordance with the SMTP. More specifically, the IP address of the destination terminal is treated as a destination IP address to be set in a header field of an IP data gram (S104), and steps in accordance with the SMTP are processed (S105).

Fig. 6 shows a sequence prior to mail data transmission based on the SMTP. First, a TCP connection is established with the destination terminal (71) using the obtained IP address of the destination terminal (71). After the destination terminal (71) of the receiver side completes a preparation, the destination terminal (71) replies with a response "220".

The internet facsimile apparatus 70 of the sender side, after receiving a response "220", sends a command "EHLO" to the destination terminal (71) and notifies the destination terminal (71) of the use of an SMTP extension function (SMTP extension).

After receiving "EHLO", the destination terminal (71) replies with a response "250". If the destination terminal (71) of the receiver side supports special steps for both of the internet facsimile apparatuses, the destination terminal (71) replies with "X-IFAX*****", as a parameter following the response "250".

If the destination terminal of the receiver side does not support the SMTP extension and cannot respond to "EHLO", the reply "250" is not sent back in response to "EHLO". Thus, it can be recognized that the receiver does not support the SMTP extension.

The internet facsimile apparatus 70 of the sender side, after receiving the reply "250" from the destination terminal (71) of the receiver side, recognizes that the destination terminal (71) of the receiver side supports the special steps for both of the internet facsimile apparatuses, and transmits its own registered capability information to the destination terminal (71) of the receiver side.

The destination terminal (71) of the receiver side, after replying with the response "250", transmits its own registered capability information to the internet facsimile apparatus 70 of the sender side.

Likewise, between the first internet facsimile apparatus 70 of the sender side and the second internet facsimile apparatus 71 of the receiver side, capability information is exchanged in accordance with the SMTP extension.

If based on a premise that only e-mail transmission is performed in accordance with the SMTP, capability information of the sender side does not necessarily have to be transmitted to the receiver side.

After starting the communication according to the SMTP at S105 above, and after receiving a parameter indicating that the internet facsimile apparatus 71 of the receiver side supports the special steps for both of the IFAX with the reply "250", the first internet facsimile apparatus 70 recognizes that the destination terminal is the same type of IFAX (S106), transmits the sender side's capability information as described above (S107), and receives the receiver side's capability information from the internet facsimile apparatus 71 of the receiver side (S108).

The capability information obtainer 25 stores the capability information of the second internet facsimile apparatus 71 in a predetermined address of the inner table 22 (S109). If the capability information of the second internet facsimile apparatus 71 has already been stored from the previous communication, the newly obtained capability information overwrites the previous one.

The capability information obtainer 25 then compares the capability information of the first internet facsimile apparatus 70 and the second internet facsimile apparatus 71 obtained at this time (S110). If the capability of the second internet facsimile apparatus 71 is relatively lower than the first internet facsimile apparatus 70, there is a need to convert the data format of the first internet facsimile apparatus 70 to match the capability of the second internet facsimile apparatus 71. For example, if the resolution of the second internet facsimile apparatus 71 is lower than the resolution of the first internet facsimile apparatus 70, converting the resolution of the first internet facsimile apparatus 70 is needed to match the resolution of the second internet facsimile apparatus 71.

Based on the result of the comparison at S110, if there is a need to convert the data format because of the differences in the capabilities of the sender and receiver sides, the data format is converted (S112). The data format in this context includes resolution, encoding methods, and image sizes. If the receiver side's capability is lower than the sender side's capability, or in case of an encoding method that the receiver side does not support, the sender side converts the data format (resolution, encoding method, image size, etc.) of the image information to match the receiver side's capability, creates mail in the mail data format using the e-mail composer 27, and transmits the mail data (S113).

If the destination terminal (71) is not detected to be the same type of internet facsimile apparatus at S106, whether the capability information of the destination terminal is registered in the inner table 22 is checked (S120). If the capability information is registered, the control moves to S110. Also, if the capability information is not registered, the data format is converted to a so-called minimum set, which is recommended by the regulation standard (S121).

In the embodiment of the present invention, the data format is converted to the minimum set in view of the communication between internet facsimile apparatuses. However, if the communication is not between internet facsimile apparatuses, it does not guarantee that the receiver side can process the data format converted into the minimum set. Therefore, the data format does not have to be converted to the minimum set for the transmission.

If it is detected that the IP address of the destination terminal (71) is not obtained at S103 above, the DNS server inquirer 24 accesses the DNS server on the WAN using a default IP address, and asks for an IP address of the destination terminal (S130). The DNS server, by notifying a domain name, obtains an IP address of the machine that has the domain name from the DNS server (or other server, or its own server if maintained by itself) managing the domain name. The obtained IP address of the machine with the domain name is returned to the first internet facsimile apparatus 70, which made the inquiry.

If the IP address is successfully obtained from the DNS server (S131), the control moves to S104 and the destination IP address is set.

If the IP address is not obtained from the DNS server (S131), the default IP address of the mail server is set in the header field as a destination IP address (S132), and the control moves to S120 above to convert the data format to match the minimum set. In this situation, the capability information of the destination terminal (71) is not registered in the inner table 22, and the direct negotiation cannot be made with the destination terminal (71) using SMTP extension. Therefore, mail forwarding is requested to the mail server. For example, the e-mail is transmitted to the mail server 77 on the network in Fig. 7. In this case, the mail server 77 obtains an IP address of the mail server 78 from the DNS server, and using the IP address, the e-mail is forwarded from the mail server 77 to the mail server 78. The internet facsimile apparatus 71 of the receiver side receives, according to the POP3, for example, the e-mail addressed to itself from the mail server 78. If the capability information is registered after referring to the inner table 22, the control also moves to S110.

Even if the capability information exchange with the receiver side is not possible, by determining whether the capability information is already registered at S120 above, it is possible to convert a data format to match the receiver side's capability if a user has manually registered the capability information. Or, if the capability information obtained from the previous capability information exchange is registered, it is possible to convert the data format to match the receiver side's capability. Additionally, it is preferable to provide a structure in the inner table 22, so that the user can manually input the capability information of the destination terminal by operating the operation panel 4.

Finally, whether the IP address of the destination terminal is obtained from the DNS server at S130 above is checked (S133). If the IP address of the destination terminal is obtained, the domain name of the mail address, IP address, and the capability information of the destination terminal are registered in the inner table 22 (S134). Thus, a list is automatically created in the inner table 22, by associating the domain name, IP address, and capability information of the destination terminal.

As described above, according to the embodiment of the present invention, an IP address of a destination terminal is obtained to transmit mail directly to the destination terminal, so that mail transmission is possible without using mail servers. As a result, mail transmission is performed more efficiently, and the use of mail servers can be reduced at the same time.

Also, according to the embodiment of the present invention, after obtaining an IP address of a destination terminal, capability information of the destination terminal is also obtained by communicating with the destination terminal using the SMTP. Therefore, when the receiver side has a high capability (capability higher than a minimum set) that matches the sender side's capability, it is possible to transmit mail with the high capability without lowering the data format into the minimum set.

Further, according to the embodiment of the present invention, capability information of a destination terminal is obtained and e-mail transmission to the destination terminal is performed in one SMTP sequence. Therefore, it is possible to simplify the process without separately executing the process of obtaining capability information and transmitting mail.

In the explanation above, an internet facsimile apparatus is used, however, this invention is not limited to internet facsimile apparatuses only, but can be applied to any communication apparatuses that performs e-mail transmission and reception using the SMTP with a constant connection to a phone line.

The present invention is not limited to the above-described embodiments, and various variations and modifications may be possible without departing from the scope of the present invention.

This application is based on the Japanese Patent Application No. 2001-173930 filed on June 8, 2001, entire content of which is expressly incorporated by reference herein.

## Claims

1. A data communication apparatus comprising:
an address input section (4) that inputs an e-mail address of a destination terminal;
an IP address obtainer (21) that obtains an IP address of the destination terminal based on the input e-mail address; and
a mail protocol executor (23) that transmits e-mail directly, without using a mail server, to the destination terminal utilizing the IP address of the destination terminal, when the IP address of the destination terminal is obtained.

2. A data communication apparatus comprising;
an address input section (4) that inputs an e-mail address of a destination terminal;
a table (22) where an IP address of the destination terminal and a domain name of the e-mail address of the destination terminal are registered;
a recognizer that recognizes the domain name of the e-mail address input by the address input section;
an extractor that extracts an IP address of the destination terminal associated with the recognized domain name from the table; and
a mail protocol executor (23) that transmits the e-mail directly, without using a mail server, to the destination terminal utilizing the IP address of the destination terminal, when the IP address is obtained.

3. The data communication apparatus of Claim 2, wherein, when the IP address of the destination terminal is not registered in the table, the e-mail is transmitted to the mail server.

4. The data communication apparatus of Claim 2, wherein, when the IP address of the destination address is not registered in the table (22), an inquiry is made to a DNS server for the IP address of the destination terminal.

5. The data communication apparatus of Claim 4, wherein, when the IP address of the destination terminal is obtained from the DNS server, the domain name of the e-mail address of the destination terminal and the IP address obtained at this time are registered in the table (22).

6. A data communication apparatus comprising:
an address input section (4) that inputs an e-mail address of a destination terminal;
an IP address obtainer (21) that obtains an IP address of the destination terminal;
a capability information obtainer (25) that establishes a connection with the destination terminal by using the IP address of the destination terminal, and obtains capability information of the destination terminal by executing a mail protocol with an ability to exchange capability information;
a converter (27) that converts a data format of sending data to match the obtained capability information of the destination terminal; and
a mail transmitter (23) that transmits the sending data with the converted data format as e-mail.

7. The data communication apparatus of Claim 6, wherein the mail protocol is an SMTP, and obtainment of the capability information of the destination terminal and e-mail transmission to the destination terminal is performed, during the SMTP.

8. The data communication apparatus of Claim 6, wherein, the capability information obtainer (25) detects, during the SMTP, whether the destination terminal supports the special steps for internet facsimiles from a response to an EHLO command, and when the destination terminal supports the special steps, the capability information is received from the other destination terminal.

9. An internet facsimile apparatus, wherein the data communication apparatus of Claim 1 is equipped.

10. A data communication method comprising:
inputting an e-mail address of a destination terminal;
obtaining an IP address of the destination terminal based on the input e-mail address; and
transmitting the e-mail directly, without using a mail server, to the destination terminal utilizing the IP address of the destination terminal, when the IP address of the destination terminal is obtained.

11. A data communication method comprising:
inputting an e-mail address of a destination terminal;
recognizing a domain name of the input e-mail address;
extracting an IP address of the destination terminal associated with the recognized domain name, from a table where the IP address of the destination terminal and the domain name of the e-mail address of the destination terminal are registered; and
transmitting the e-mail directly, without using a mail server, to the destination terminal utilizing the IP address, when the IP address of the destination terminal is obtained.

12. A data communication method comprising:
inputting an e-mail address of a destination terminal;
obtaining an IP address of the destination terminal;
obtaining capability information of the destination terminal by executing a mail protocol with an ability to exchange capability information, after establishing a connection with the destination terminal using the IP address of the destination terminal;
converting a data format of a sending data to match the obtained capability information of the destination terminal; and
transmitting the sending data with the converted data format as e-mail.
